(19)

**Europäisches Patentamt**

**European Patent Office**

**Office européen des brevets**

(11) **EP 3 876 376 A1**

(12) **EUROPÄISCHE PATENTANMELDUNG**

(43) Veröffentlichungstag:
   **08.09.2021 Patentblatt 2021/36**

(51) Int Cl.:
   **H02J 3/00** (2006.01)

(21) Anmeldenummer: **20161156.3**

(22) Anmeldetag: **05.03.2020**

(84) Benannte Vertragsstaaten:
   **AL AT BE BG CH CY CZ DE DK EE ES FI FR GB GR HR HU IE IS IT LI LT LU LV MC MK MT NL NO PL PT RO RS SE SI SK SM TR**
   Benannte Erstreckungsstaaten:
   **BA ME**
   Benannte Validierungsstaaten:
   **KH MA MD TN**

(71) Anmelder: **Siemens Aktiengesellschaft**
   **80333 München (DE)**

(72) Erfinder:
   • **Dölle, Oliver**
      **06108 Halle (DE)**
   • **Niessen, Stefan**
      **91056 Erlangen (DE)**
   • **Schreck, Sebastian**
      **90429 Nürnberg (DE)**
   • **Thiem, Sebastian**
      **91413 Neustadt an der Aisch (DE)**

(54) **STEUERUNGSPLATTFORM FÜR ENERGIEAUSTAUSCHE ZWISCHEN MEHREREN ENERGIESYSTEMEN SOWIE ENERGIEAUSTAUSCHSYSTEM**

(57) Es wird ein Verfahren zum Betrieb einer Steuerungsplattform für Energieaustausche zwischen mehreren Energiesystemen vorgeschlagen, wobei durch die Steuerungsplattform von den Energiesystemen für wenigstens einen Zeitbereich jeweils wenigstens eine Information über einen vorgesehenen Energieaustausch empfangen wird, und bei dem die Steuerungsplattform bezüglich einer Zielfunktion optimale Energieaustausche zwischen den Energiesystemen als Lösung eines Optimierungsverfahren berechnet, wobei

- die Steuerungsplattform von wenigstens einem der Energiesysteme eine Information über mehrere mögliche Energieaustausche $s$ empfängt, wobei jedem dieser Energieaustausche $s$ ein Wahrscheinlichkeitswert $\zeta_s$ zugeordnet ist, der ebenfalls durch die Steuerungsplattform empfangen wird;

- für jeden der empfangenen möglichen Energieaustausche $s$ ein Optimierungsverfahren durchgeführt und somit eine zugehörige Teillösung $Z(\zeta_s)$ berechnet wird;

- die Gesamtlösung (142) aus den mehreren Teillösungen $Z(\zeta_s)$ in Abhängigkeit ihrer Wahrscheinlichkeitswerte $\zeta_s$ berechnet wird; und

- die Energieaustausche zwischen den Energiesystemen basierend auf der ermittelten Gesamtlösung (142) durch die Steuerungsplattform gesteuert werden.

Weiterhin betrifft die Erfindung eine Steuerungsplattform, ein Energieaustauschsystem sowie ein Verfahren zum Betrieb eines solchen Energieaustauschsystems.

FIG 2

**Beschreibung**

Die Erfindung betrifft ein Verfahren zum Betrieb einer Steuerungsplattform gemäß dem Oberbegriff des Patentanspruches 1, eine Steuerungsplattform gemäß dem Oberbegriff des Patentanspruches 9, ein Verfahren zum Betrieb eines Energieaustauschsystems gemäß dem Oberbegriff des Patentanspruches 10 sowie ein Energieaustauschsystem gemäß dem Oberbegriff des Patentanspruches 11.

Durch einen lokalen Energiemarkt können Energiesysteme lokal gewonnene Energie, insbesondere elektrische Energie (Strom), untereinander austauschen und handeln. Hierbei ermöglicht es der lokale Energiemarkt durch seine dezentrale technische Ausgestaltung die lokal gewonnene Energie effizient mit dem lokalen Energieverbrauch abzustimmen. Somit ist ein lokaler Energiemarkt besonders im Hinblick auf erneuerbare Energien, die typischerweise lokal gewonnen werden, vorteilhaft. Grundsätzlich können hierbei die Energiesysteme in Energieverbraucher (Verbraucher), in Energiewandler und in Prosumer, die Energie sowohl verbrauchen als auch bereitstellen beziehungsweise gewinnen können, kategorisiert werden. Hierbei können Energiewandler umgangssprachlich als Energieerzeuger (Erzeuger) bezeichnet werden, wobei sich der Begriff der Erzeugung auf die bereitgestellte Energieform, beispielsweise Strom bei Stromerzeugern, bezieht.

Technisch wird ein lokaler Energiemarkt durch eine Steuerungsplattform, die ebenfalls als Energiemarktplattform bezeichnet werden kann, verwirklicht. Hierbei koordiniert beziehungsweise steuert die Steuerungsplattform die Energieaustausche zwischen den Energiesystemen basierend auf Angebote, die die Energiesysteme vorab an die Steuerungsplattform übermitteln.

Eine solche Steuerungsplattform beziehungsweise lokaler Energiemarkt ist beispielsweise aus dem Dokument EP 3518369 A1 bekannt.

Für kleinere Energiesysteme, beispielsweise Wohngebäude, ergeben sich im Hinblick auf ihre Einbindung in einen lokalen Energiemarkt mehrere Herausforderungen. Insbesondere muss der Steuerungsplattform vorab eines tatsächlichen Energieaustausches bekannt sein, welche Energiemenge ein Energiesystem innerhalb eines festgelegten Zeitbereiches voraussichtlich verbraucht und/oder bereitstellt. Mit anderen Worten ist eine Vorhersage über den für das jeweilige Energiesystem zu erwartenden Energieaustausch erforderlich. Hierbei erfolgt das Übermitteln des vorgesehenen Energieaustausches an die Steuerungsplattform typischerweise im Rahmen von Angeboten.

Kleinere Energiesysteme weisen typischerweise größere Ungenauigkeiten bezüglich ihrer Vorhersagen auf. Für größere Energiesysteme, beispielsweise für Wohnsiedlungen, kann ein Standardlast- und/oder Standarderzeugungsprofil verwendet werden, welches typischerweise eine ausreichend gute Näherung darstellt. Für kleinere Energiesystem sind diese Standardprofile aufgrund von stochastischen Prozessen, beispielsweise einem Einschalten eines Staubsaugers, eine deutlich schlechtere Näherung. Mit anderen Worten dominieren stochastische Prozesse das Bedarfsprofil beziehungsweise Lastprofil kleinerer Energiesysteme.

Durch eine mit Unsicherheiten behaftete Vorhersage verschlechtert sich die Effizienz des lokalen Energiemarktes, da Gewinnung/Bereitstellung und Verbrauch von Energie eine größere Abweichung zueinander aufweisen. Somit ist es erforderlich die Differenz durch positive oder negative Reserveenergie auszugleichen, die beispielsweise durch ein bezüglich des lokalen Energiemarktes externes Stromnetz, bereitgestellt wird. Mit anderen Worten verringert sich mit zunehmender Unsicherheit der Vorhersage die Effizienz des lokalen Energiemarktes, da entweder stets Reserveenergie bereitgestellt werden muss und/oder lokal gewonnene Energie nicht verbraucht wird und somit zwischengespeichert und/oder in das übergeordnete Stromnetz eingespeist werden muss.

Der vorliegenden Erfindung liegt die Aufgabe zugrunde, ein Verfahren zum Betrieb einer Steuerungsplattform sowie eine Steuerungsplattform bereitzustellen, die die Effizienz des zugehörigen lokalen Energiemarktes bezüglich Unsicherheiten der Energieaustausche verbessert.

Die Aufgabe wird durch ein Verfahren mit den Merkmalen des unabhängigen Patentanspruches 1, durch eine Steuerungsplattform mit den Merkmalen des unabhängigen Patentanspruches 9 gelöst, durch ein Verfahren zum Betrieb eines Energieaustauschsystems mit den Merkmalen des unabhängigen Patentanspruches 10 sowie durch ein Energieaustauschsystem mit den Merkmalen des unabhängigen Patentanspruches 11.

In den abhängigen Patentansprüchen sind vorteilhafte Ausgestaltungen und Weiterbildungen der Erfindung angegeben.

Bei dem erfindungsgemäßen Verfahren zum Betrieb einer Steuerungsplattform für Energieaustausche zwischen mehreren Energiesystemen wird durch die Steuerungsplattform von den Energiesystemen für wenigstens einen Zeitbereich jeweils wenigstens eine Information über einen vorgesehenen Energieaustausch empfangen, und durch die Steuerungsplattform bezüglich einer Zielfunktion optimale Energieaustausche zwischen den Energiesystemen als Lösung eines Optimierungsverfahren berechnet. Das erfindungsgemäße Verfahren ist gekennzeichnet dadurch, dass

- die Steuerungsplattform von wenigstens einem der Energiesysteme eine Information über mehrere mögliche Energieaustausche $s$ empfängt, wobei jedem dieser Energieaustausche $s$ ein Wahrscheinlichkeitswert $\zeta_s$ zugeordnet ist, der ebenfalls durch die Steuerungsplattform empfangen wird;

- für jeden der empfangenen möglichen Energieaustausche *s* ein Optimierungsverfahren durchgeführt und somit eine zugehörige Teillösung $Z(\zeta_s)$ berechnet wird;
- die Gesamtlösung aus den mehreren Teillösungen $Z(\zeta_s)$ in Abhängigkeit ihrer Wahrscheinlichkeitswerte $\zeta_s$ berechnet wird; und
- die Energieaustausche zwischen den Energiesystemen basierend auf der ermittelten Gesamtlösung durch die Steuerungsplattform gesteuert werden.

Das Verfahren zum Betrieb einer Steuerungsplattform gemäß der vorliegenden Erfindung und/oder einer ihrer Ausgestaltungen oder ein oder mehrere Funktionen, Merkmale und/oder Schritte des Verfahrens beziehungsweise seiner Ausgestaltungen können computergestützt sein.

Vorliegend umfasst der Begriff des Steuerns ein Regeln.

Energie kann durch eine Energiegewinnung, beispielsweise mittels eines Energiewandlers, und/oder durch einen Energiespeicher bereitgestellt werden. Der Begriff des Energieverbrauchs umfasst jede Art von Verbrauch an bereitgestellter Energie, insbesondere ebenfalls eine Energiespeicherung.

Ein möglicher Energieaustausch ist eine im Zeitbereich wahrscheinliche Energiemenge, die eine bestimmte Wahrscheinlichkeit aufweist, das heißt der ein Wahrscheinlichkeitswert zugeordnet ist. Mit anderen Worten ist ein möglicher Energieaustausch durch eine Wahrscheinlichkeitsdichtefunktion charakterisiert. Hierbei gibt der Wahrscheinlichkeitswert beziehungsweise die Wahrscheinlichkeitsdichtefunktion an, wie wahrscheinlich ein Energieaustausch mit einer bestimmten zugehörigen Energiemenge ist. Der Wahrscheinlichkeitswert beziehungsweise die Wahrscheinlichkeitsdichtefunktion können mittels statistischer Verfahren/Methoden und/oder mittels historischer Daten von historischen beziehungsweise vergangenen Energieaustauschen ermittelt werden.

Ein Optimierungsverfahren beziehungsweise eine Optimierung im Sinne der vorliegenden Erfindung ist ein Verfahren zur Minimierung oder Maximierung einer Zielfunktion. Die Minimierung beziehungsweise Maximierung der Zielfunktion erfolgt aufgrund ihrer Komplexität typischerweise numerisch. Die Zielfunktion charakterisiert hierbei eine oder mehrere Eigenschaften oder Größen des Systems, beispielsweise die Kohlenstoffdioxidemissionen, die gesamt ausgetauschte Energiemenge (Volumen) und/oder die Betriebskosten eines oder mehrerer Energiesystems. Die Zielfunktion weist Parameter, insbesondere technische Parameter der Energiesysteme, und Variablen auf.

Das Ergebnis der Optimierung sind die Werte der Variablen, die den auszutauschenden Energiemengen beziehungsweise Leistungen entsprechen. Somit kennzeichnet die Lösung des Optimierungsverfahrens wenigstens, welche Energiemengen durch welches Energiesystem innerhalb des Zeitbereiches verbraucht und/oder bereitgestellt werden. Mit anderen Worten sind die Energieaustausche zwischen den Energiesystemen die Lösung des Optimierungsverfahrens.

Äquivalent zu Energieaustauschen werden Leistungsaustausche beziehungsweise Leistungen verwendet, da diese integriert über einen Zeitbereich die entsprechende Energiemenge darstellen. Mit anderen Worten sind vorliegend die Begriffe Energie und Leistung äquivalent und untereinander austauschbar, da zu einer Leistung in einem Zeitbereich stets eine zugehörige Energie beziehungsweise Energiemenge korrespondiert.

Bei dem erfindungsgemäßen Verfahren empfängt die Steuerungsplattform von mehreren Energiesystemen für den Zeitbereich, beispielsweise für einen kommenden Tag, für eine kommende Stunde oder für kommende 15 Minuten, die Information über den vorgesehenen Energieaustausch. Mit anderen Worten teilen die Energiesysteme (nicht notwendigerweise jedes der Energiesysteme) der Steuerungsplattform mit, welche Energiemenge es innerhalb des Zeitbereiches voraussichtlich verbraucht, insbesondere speichert, und/oder bereitstellt, insbesondere gewinnt. Beispielsweise erfolgt dies mittels eines jeweiligen Tupels, welches die durch das jeweilige Energiesystem maximal verbrauchbare, insbesondere speicherbare, und/oder bereitstellbare, insbesondere gewinnbare, Energiemenge kennzeichnet und ein zugehöriges Entgelt umfasst. Für eine Bereitstellung wird ein minimales Entgelt, beispielsweise in der Einheit Euro pro Kilowattstunde, und für einen Verbrauch ein maximales Entgelt, beispielsweise in der Einheit Euro pro Kilowattstunde, übermittelt. Mit anderen Worten übermittelt jedes Energiesystem - sofern es am Energieaustausch innerhalb des Zeitbereiches partizipiert - ein Angebot für eine maximale Energiemenge für einen bei einer Bereitstellung minimalen Preis oder für einen bei einem Verbrauch maximalen Preis. Somit umfasst das Angebot die technische Information der jeweiligen maximal auszutauschenden Energiemenge. Wird ein kontinuierlicher beziehungsweise quasi-kontinuierlicher Betrieb angestrebt, so werden die genannten Informationen für jeden Zeitbereich/Zeitschritt von den Energiesystemen an die Steuerungsplattform übermittelt und durch diese empfangen.

Von wenigstens einem der Energiesysteme empfängt die Steuerungsplattform eine Information über mehrere mögliche Energieaustausche *s* für *s* = 1,...,*N*, wobei jedem dieser Energieaustausche *s* ein Wahrscheinlichkeitswert $\zeta_s$ zugeordnet ist. Der zum Energieaustausch zugehörige Wahrscheinlichkeitswert $\zeta_s$ wird ebenfalls an die Steuerungsplattform übermittelt und durch diese empfangen. Mit anderen Worten wird eine Wahrscheinlichkeitsverteilung (diskret oder kontinuierlich als Dichtefunktion) bezüglich der möglichen Energieaustausche an die Steuerungsplattform übermittelt und durch diese empfangen. Beispielsweise ist die Information durch Wahrscheinlichkeits-Energiemengen-Tupel

EP 3 876 376 A1

$$([\zeta_1, P_{t,n,k} \leq P_1^{\max}], \ldots, [\zeta_N, P_{t,n,k} \leq P_N^{\max}])$$ gekennzeichnet. Hierbei kennzeichnet $P_{t,n,k}$ die Leistung des Energiesystems $k$ am Netzknoten $n$ zum Zeitpunkt $t$ beziehungsweise innerhalb des zugehörigen Zeitbereiches. Somit kennzeichnet das jeweilige Datenfeld $[\zeta_s, P_{t,n,k} \leq P_s^{\max}]$ die Wahrscheinlichkeit $\zeta_s$ dafür, dass die innerhalb des Zeitbereiches ausgetauschte Leistung kleiner oder gleich $P_s^{\max}$ ist beziehungsweise die innerhalb des Zeitbereiches $T$ ausgetauschte Energiemenge kleiner oder gleich $P_s^{\max} \cdot T$ ist.

Erfindungsgemäß wird für jeden der empfangenen möglichen Energieaustausche $s$ ein Optimierungsverfahren durchgeführt und somit eine zugehörige Teillösung $Z(\zeta_s)$ berechnet. Die Berechnung der mehreren Teillösungen kann parallel oder seriell erfolgen. Die Teillösungen sind dem jeweiligen Wahrscheinlichkeitswert $\zeta_s$ zugeordnet, sodass die Teillösungen von diesem abhängig sind. Jede Teillösung $Z(\zeta_s)$ charakterisiert die möglichst optimalen Energieaustausche zwischen den Energiesystemen, falls das eine der Energiesysteme lediglich den möglichen Energieaustausch $s$ als vorgesehenen Energieaustausch übermittelt hätte.

Sind die Teillösungen bekannt, so wird erfindungsgemäß eine Gesamtlösung aus den mehreren Teillösungen ermittelt beziehungsweise berechnet. Die Berechnung erfolgt hierbei in Abhängigkeit der Wahrscheinlichkeitswerte $\zeta_s$. Insbesondere wird eine der Teillösungen $Z^* = Z(\zeta_{s=s^*})$ ermittelt, welche im Hinblick auf die Wahrscheinlichkeit der möglichen Energieaustausche $s$ einen Kompromiss beziehungsweise einen Ausgleich zwischen einer risikoreichen und einer risikoarmen Lösung ist. Beispielsweise wird $Z^*$ durch eine markante Änderung in dem Funktionsverlauf $Z(\zeta_s)$ beziehungsweise $Z(\zeta)$ ermittelt.

Die tatsächlichen Energieaustausche zwischen den Energiesystemen sind durch die Gesamtlösung festgelegt. Die erfindungsgemäße Steuerungsplattform steuert nun basierend beziehungsweise entsprechend der ermittelten Gesamtlösung die Energieaustausche zwischen den Energiesystemen. Hierbei ist der Begriff des Steuerns weit auszulegen. Insbesondere soll jede Maßnahme der Steuerungsplattform, die grundsätzlich wenigstens eine unmittelbare oder mittelbare Teilwirkung auf die tatsächlichen Energieaustausche hat, als Steuerung durch die Steuerungsplattform verstanden werden. Beispielsweise werden die Energieaustauche durch ein Datensignal, welches Steuerungsdaten umfasst und durch die Steuerungsplattform an die jeweiligen Energiesysteme übermittelt wird, gesteuert. Durch das Datensignal werden beispielsweise energietechnische Anlagen der Energiesysteme angeschaltet, zugeschaltet, abgeschaltet und/oder in ihrem Betrieb verändert, wobei die tatsächliche unmittelbare Betriebssteuerung der Anlagen hierbei dem Energiesystem und/oder einem Energiemanagementsystem des Energiesystems überlassen werden kann. Das Signal der Steuerungsplattform bildet hierbei lediglich den Auslöser für die genannten betrieblichen Abläufe aus, die dann letztlich zum Energieaustausch, das heißt zur Energiebereitstellung und/oder zum Energieverbrauch, führen. Insbesondere ist das Signal der Steuerungsplattform ein Preissignal, das heißt ein Datensignal, welches eine kostenvorteilhafte Bereitstellung und/oder einen kostenvorteilhaften Verbrauch kennzeichnet. Beispielsweise ist eine Bereitstellung kostenvorteilhaft, wenn mehr Energie lokal verbraucht werden soll, als lokal bereitgestellt wird. Beispielsweise wird durch das Preissignal ein lokales Blockheizkraftwerk angeschaltet. Ein lokaler Verbrauch ist insbesondere dann kostenvorteilhaft, wenn mehr Energie lokal bereitgestellt wird, als lokal verbraucht wird. Beispielsweise bei einer erhöhten Photovoltaikstromerzeugung am Nachmittag. Somit wird durch das Preissignal ebenfalls die energetische Effizienz des lokalen Energiemarktes verbessert, da die lokale Bereitstellung von Energie und ihr lokaler Verbrauch verbessert in Übereinstimmung gebracht werden können und somit weniger Reserveenergie bereitgestellt und/oder verwendet werden muss.

Gemäß der vorliegenden Erfindung werden somit die Unsicherheiten für einen vorgesehenen Energieaustausch, das heißt für eine Energiebereitstellung und/oder einen Energieverbrauch, bei der Optimierung durch die Steuerungsplattform berücksichtigt. Somit kann eine bezüglich der Unsicherheiten technisch bestmögliche und objektive Gesamtlösung ermittelt werden. Dadurch werden die Unsicherheiten beziehungsweise die zugehörigen Wahrscheinlichkeiten gesamtheitlich betrachtet, sodass diese sinnbildlich gegeneinander gehebelt werden können. Durch diese gesamtheitliche Betrachtung wird die Unsicherheit innerhalb des gesamten lokalen Energiemarktes reduziert. Dadurch muss weniger Reserveleistung zum Ausgleich bereitgestellt werden, sodass Energiebereitstellung und Energieverbrauch effizienter in Übereinstimmung gebracht werden können. Mit anderen Worten werden eintretende Differenzen in der Energiebilanz zwischen den Energiesystemen durch die Steuerungsplattform a priori erkannt und können somit reduziert werden. Weiterhin kann die Optimierung und somit die Lösung derart robust ausgelegt sein, dass selbst im schlechtesten Fall (englisch: Worst Case) ausreichend Reserveenergie/Reserveleistung bereitgestellt wird. Hierbei können Reservekapazitäten verbessert abgeschätzt und effizienter verwendet werden.

Ein weiterer Vorteil der vorliegenden Erfindung ist, dass der Ausbau erneuerbarer Energien, insbesondere ihr lokaler Ausbau, gefördert wird. Hierbei kann ebenfalls der Ausbau von Energiespeichern, insbesondere von elektrochemischen Energiespeicher, beispielsweise von Batteriespeichern, gefördert werden. Diese stellen Flexibilität bereit und stabilisieren den lokalen Energiemarkt, der typischerweise größtenteils volatile Energiequellen umfasst. Dadurch wird das übergeordnete Stromnetz entlastet, da lokale Bereitstellung von Energie und ihr lokaler Verbrauch verbessert abgestimmt werden können.

Die erfindungsgemäße Steuerungsplattform zum Steuern von Energieaustauschen zwischen mehreren Energiesystemen, wobei durch die Steuerungsplattform von den Energiesystemen für wenigstens einen Zeitbereich jeweils wenigstens eine Information über einen vorgesehenen Energieaustausch empfangbar ist, und durch die Steuerungsplattform bezüglich einer Zielfunktion optimale Energieaustausche zwischen den Energiesystemen als Lösung eines Optimierungsverfahrens berechenbar sind, ist dadurch gekennzeichnet, dass

- durch die Steuerungsplattform von wenigstens einem der Energiesysteme eine Information über mehrere mögliche Energieaustauschen s empfangbar ist, wobei jedem dieser Energieaustausche $s$ ein Wahrscheinlichkeitswert $\zeta_s$ zugeordnet ist, der ebenfalls durch die Steuerungsplattform empfangbar ist;
- für jeden der empfangenen möglichen Energieaustausche $s$ ein Optimierungsverfahren durch die Steuerungsplattform durchführbar und somit eine zugehörige Teillösung $Z(\zeta_s)$ berechenbar ist;
- die Gesamtlösung aus den mehreren Teillösungen $Z(\zeta_s)$ in Abhängigkeit ihrer Wahrscheinlichkeitswerte $\zeta_s$ durch die Steuerungsplattform berechenbar sind; und
- die Energieaustausche zwischen den Energiesystemen basierend auf der ermittelten Gesamtlösung durch die Steuerungsplattform steuerbar sind.

Die Steuerungsplattform ist dazu ausgestaltet, die genannten Merkmale, wie beispielsweise das Empfangen der Daten und/oder das Berechnen der Teillösungen und der Gesamtlösung mittels des Optimierungsverfahren, durchzuführen.

Es ergeben sich zum erfindungsgemäßen Verfahren zum Betrieb einer Steuerungsplattform gleichartige und/oder gleichwertige Vorteile und/oder Ausgestaltungen.

Das erfindungsgemäße Verfahren zum Betrieb eines Energieaustauschsystems, das mehrere Energiesysteme und eine Steuerungsplattform umfasst, wobei die Energiesysteme für wenigstens einen Zeitbereich jeweils eine Information über wenigstens einen vorgesehenen Energieaustausch an die Steuerungsplattform übermitteln, und bei dem die Steuerungsplattform bezüglich einer Zielfunktion optimale Energieaustausche zwischen den Energiesystemen als Lösung eines Optimierungsverfahren berechnet, ist gekennzeichnet dadurch, dass

- wenigstens eines der Energiesysteme eine Information über mehrere mögliche Energieaustausche s an die Steuerungsplattform übermittelt, wobei jedem dieser Energieaustausche $s$ ein Wahrscheinlichkeitswert $\zeta_s$ zugeordnet ist, der ebenfalls an die Steuerungsplattform übermittelt wird;
- für jeden der übermittelten möglichen Energieaustausche s ein Optimierungsverfahren durchgeführt und somit eine zugehörige Teillösung $Z(\zeta_s)$ ermittelt wird;
- die Gesamtlösung aus den mehreren Teillösungen $Z(\zeta_s)$ in Abhängigkeit ihrer Wahrscheinlichkeitswerte $\zeta_s$ berechnet wird; und
- die Energieaustausche zwischen den Energiesystemen basierend auf der ermittelten Gesamtlösung durch die Steuerungsplattform gesteuert werden.

Das Verfahren zum Betrieb eines Energieaustauschsystems gemäß der vorliegenden Erfindung und/oder einer ihrer Ausgestaltungen oder eine oder mehrere Funktionen, Merkmale und/oder Schritte des Verfahrens und/oder seiner Ausgestaltungen können computergestützt sein.

Es ergeben sich zum erfindungsgemäßen Verfahren zum Betrieb einer Steuerungsplattform gleichartige und/oder gleichwertige Vorteile und/oder Ausgestaltungen.

Das erfindungsgemäße Energieaustauschsystem, umfassend mehrere Energiesysteme und eine Steuerungsplattform, wobei die Energiesysteme und die Steuerungsplattform derart ausgebildet sind, dass durch die Energiesysteme für wenigstens einen Zeitbereich jeweils eine Information über wenigstens einen vorgesehenen Energieaustausch an die Steuerungsplattform übermittelbar ist, und mittels der Steuerungsplattform bezüglich einer Zielfunktion optimale Energieaustausche zwischen den Energiesystemen als Lösung eines Optimierungsverfahrens berechenbar ist, ist dadurch gekennzeichnet, dass

- wenigstens durch eines der Energiesysteme eine Information über mehrere mögliche Energieaustausche s an die Steuerungsplattform übermittelbar sind, wobei jedem dieser Energieaustausche $s$ ein Wahrscheinlichkeitswert $\zeta_s$ zugeordnet ist, der ebenfalls an die Steuerungsplattform übermittelbar ist;
- für jeden der übermittelten möglichen Energieaustausche s ein Optimierungsverfahren durch die Steuerungsplattform durchführbar und somit eine zugehörige Teillösung $Z(\zeta_s)$ berechenbar ist;

- die Gesamtlösung aus den mehreren Teillösungen $Z(\zeta_s)$ in Abhängigkeit ihrer Wahrscheinlichkeitswerte $\zeta_s$ durch die Steuerungsplattform berechenbar ist; und
- die Energieaustausche zwischen den Energiesystemen basierend auf der ermittelten Gesamtlösung durch die Steuerungsplattform steuerbar sind.

Das erfindungsgemäße Energieaustauschsystem ist dazu ausgestaltet, die genannten Merkmale, wie beispielsweise das Empfangen der Daten und/oder das Berechnen der Teillösungen und der Gesamtlösung mittels des Optimierungsverfahren, durchzuführen.

Das erfindungsgemäße Energieaustauschsystem bildet einen erfindungsgemäßen lokalen Energiemarkt aus.

Es ergeben sich zum erfindungsgemäßen Verfahren zum Betrieb einer Steuerungsplattform gleichartige und/oder gleichwertige Vorteile und/oder Ausgestaltungen.

Gemäß einer vorteilhaften Ausgestaltung der Erfindung erfolgt die Steuerung der Energieaustausche s mittels der Steuerungsplattform durch ein Übermitteln von jeweiligen Steuerungsdaten an das jeweilige Energiesystem.

Durch das Übermitteln der Steuerungsdaten können vorteilhafterweise jeweilige energietechnische Anlagen innerhalb der Energiesysteme gesteuert, insbesondere angefahren, zugeschaltet und/oder abgeschaltet werden. Das Steuern mehrerer Anlagen eines Energiesystems ist vorgesehen. Hierbei ist der Begriff des Steuerns sowie der Steuerungsdaten weit auszulegen. Jeder Datensatz, der nach seinem Empfangen durch das jeweilige Energiesystem grundsätzlich eine unmittelbare oder mittelbare Teilwirkung auf den Betrieb des jeweiligen Energiesystems, insbesondere seiner energietechnischen Anlagen, hat, ist durch den Begriff der Steuerungsdaten umfasst. Hierzu sind die Energiesysteme vorteilhafterweise dazu ausgestaltet, die Steuerungsdaten von der Steuerungsplattform zu empfangen und zu verarbeiten. Besonders bevorzugt umfassen die Energiesysteme hierzu ein jeweiliges Energiemanagementsystem. Die Steuerungsdaten können bevorzugt ein Preissignal umfassen, insbesondere codieren.

In einer vorteilhaften Weiterbildung der Erfindung wird für einen vorgesehenen Energieverbrauch eines der Energiesysteme eine Information über eine maximal zu verbrauchende Energiemenge von dem Energiesystem durch die Steuerungsplattform empfangen.

Mit anderen Worten übermittelt das wenigstens eine Energiesystem, insbesondere alle am Energieaustausch teilnehmenden Energiesysteme, eine Information über die maximal durch das Energiesystem zu verbrauchende Energiemenge an die Steuerungsplattform. Hierbei ist die übermittelte Energiemenge für einen Verbrauch vorgesehen. Mit anderen Worten übermitteln die Energiesysteme, die insbesondere keine möglichen Energieaustausche übermitteln und eine bestimmte Energiemenge innerhalb des Zeitbereiches verbrauchen möchten, wenigstens eine maximal zu verbrauchende Energiemenge. Wird diese maximal zu verbrauchende Energiemenge mit einer Information über ein maximales Entgelt kombiniert, so wird ein Kaufangebot für die maximal zu verbrauchende Energiemenge an die Steuerungsplattform übermittelt. Mit anderen Worten ist ein Basiskaufangebot (englisch: Buy-Order) durch die Information

$(c_{t,n,k}^{B,\max}, P_{t,n,k}^{B})$ beziehungsweise $(c_{t,n,k}^{B,\max}, P_{t,n,k}^{B}\Delta T_t)$ festgelegt, wobei $c_{t,n,k}^{B,\max}$ das maximale Entgelt zum Zeitpunkt $t$, am Knoten $n$, des Energiesystems $k$ kennzeichnet. Das beziehungsweise die Energiesysteme, die mögliche Energieaustausche an die Steuerungsplattform übermitteln, übermitteln die Information

$(c_{t,n,k}^{B,\max}, P_{t,n,k}^{B,\zeta_s} \leq P_{t,n,k}^{B,\zeta_s,\max})$ für alle $s = 1, ..., N_{t,n,k}$.

Gemäß einer vorteilhaften Ausgestaltung der Erfindung wird für eine vorgesehene Energiebereitstellung eines der Energiesysteme eine Information über eine maximal bereitzustellende Energiemenge von dem Energiesystem durch die Steuerungsplattform empfangen.

Mit anderen Worten übermittelt das wenigstens eine Energiesystem, insbesondere alle am Energieaustausch teilnehmenden Energiesysteme, eine Information über die maximal durch das Energiesystem bereitzustellende Energiemenge an die Steuerungsplattform. Hierbei ist die übermittelte Energiemenge für eine Bereitstellung vorgesehen. Mit anderen Worten übermitteln die Energiesysteme, die insbesondere keine möglichen Energieaustausche übermitteln und eine bestimmte Energiemenge innerhalb des Zeitbereiches bereitstellen möchten, wenigstens eine maximal bereitstellbare Energiemenge. Wird diese maximal bereitzustellende Energiemenge mit einer Information über ein minimales Entgelt kombiniert, so wird ein Verkaufsangebot für die maximal bereitzustellende Energiemenge an die Steuerungsplattform übermittelt. Mit anderen Worten ist ein Basisverkaufsangebot (englisch: Sell-Order) durch die Werte/Information

$(c_{t,n,k}^{S,\min}, P_{t,n,k}^{S})$ beziehungsweise $(c_{t,n,k}^{S,\min}, P_{t,n,k}^{S}\Delta T_t)$ festgelegt, wobei $c_{t,n,k}^{S,\min}$ das minimale Entgelt zum Zeitpunkt $t$, am Knoten $n$, des Energiesystems $k$ kennzeichnet. Das beziehungsweise die Energiesysteme, die mögliche Energieaustausche $s$ an die Steuerungsplattform übermitteln, übermitteln die Information

$$\left(c_{t,n,k}^{S,\min}, P_{t,n,k}^{S,\zeta_s} \leq P_{t,n,k}^{S,\zeta_s,\max}\right)$$ für alle $s = 1,...,N_{t,n,k}$.

Bevorzugt hat die Steuerungsplattform somit die Informationen $\left(c_{t,n,k}^{B,\max}, P_{t,n,k}^{B}\right)$, $\left(c_{t,n,k}^{B,\max}, P_{t,n,k}^{B,\zeta_s} \leq P_{t,n,k}^{B,\zeta_s,\max}\right)$ sowie $\left(c_{t,n,k}^{S,\min}, P_{t,n,k}^{S}\right)$, $\left(c_{t,n,k}^{S,\min}, P_{t,n,k}^{S,\zeta_s} \leq P_{t,n,k}^{S,\zeta_s,\max}\right)$ empfangen, wobei der Index *B* einen Energieverbrauch und der Index *S* eine Energiebereitstellung kennzeichnet.

Weitere Informationen, insbesondere energiesystemspezifische technischen Informationen/Parameter, können durch die Steuerungsplattform aus den Energiesystemen empfangen werden.

In einer vorteilhaften Weiterbildung der Erfindung wird die Gesamtlösung aus den mehreren Teillösungen $Z(\zeta_s)$ durch das Maximum bezüglich der Wahrscheinlichkeitswerte $\zeta_s$ benachbarter Gradienten der Teillösungen $Z(\zeta_s)$ der möglichen Energieaustausche *s* berechnet.

Mit anderen Worten wird die Gesamtlösung $Z^* = Z(\zeta_{s=s^*})$ beziehungsweise ihr zugehöriger Index $s^*$ bevorzugt mittels

$$\max_s \left[ \frac{Z(\zeta_{s-1}) - Z(\zeta_s)}{\zeta_{s-1} - \zeta_s} - \frac{Z(\zeta_s) - Z(\zeta_{s+1})}{\zeta_s - \zeta_{s+1}} \right]$$

bestimmt beziehungsweise berechnet. Hierbei sind die Wahrscheinlichkeitswerte aufsteigend geordnet, das heißt es gilt $\zeta_1 \leq \zeta_2, ..., \zeta_{N-1}, \zeta_N$. Für $\zeta_s$ sind somit $\zeta_{s-1}$ und $\zeta_{s+1}$ benachbart. Die Randpunkte $\zeta_1$ und $\zeta_N$ weisen lediglich einen benachbarten Wahrscheinlichkeitswert auf oder werden aus der genannten Bestimmung ausgenommen.

Eine besonders vorteilhafte einzelne Zielfunktion $z(\zeta_s)$, die zu einem möglichen Energieaustausch *s* zugehörig ist, ist durch

$$z(\zeta_s) = \sum_{t,n,k} \left[ P_{t,n,k}^{B,\zeta_s} \cdot c_{t,n,k}^{B,\max} - P_{t,n,k}^{S,\zeta_s} \cdot c_{t,n,k}^{S,\min} \right] \cdot \Delta T_t$$

festgelegt. Dadurch werden *s* Zielfunktionen *z* bereitgestellt, beziehungsweise falls $\zeta \in \mathbb{R}$ kontinuierlich ist, eine Funktion $z(\zeta)$ bereitgestellt. Für jeden Wert $\zeta_s$ und somit für jeden möglichen Energieaustausch *s* wird die vorliegende Zielfunktion $z(\zeta_s)$ maximiert, das heißt es werden die Werte der Variablen $P_{t,n,k}^{B,\zeta_s}$ und $P_{t,n,k}^{S,\zeta_s}$ derart bestimmt, dass $z(\zeta_s)$ einen maximalen Zielfunktionswert $Z(\zeta_s)$ aufweist. Mit anderen Worten ist jede Teillösung $Z(\zeta_s)$ durch ihren zugehörigen Zielfunktionswert $Z(\zeta_s) = \max[z(\zeta_s)]$ bestimmt, wobei das Maximum über alle $P_{t,n,k}^{B,\zeta_s}, P_{t,n,k}^{S,\zeta_s}$ gebildet wird. Bei der Berechnung der Teillösungen beziehungsweise der Zielfunktionswerte werden typischerweise Nebenbedingungen berücksichtigt. Vorliegend erfolgt die Maximierung der jeweiligen Zielfunktion bevorzugt unter den Nebenbedingungen $P_{t,n,k}^{B,\zeta_s} \leq P_{t,n,k}^{B,\zeta_s,\max}$ und $P_{t,n,k}^{S,\zeta_s} \leq P_{t,n,k}^{S,\zeta_s,\max}$, wobei $P_{t,n,k}^{B,\zeta_s,\max}$ und $\leq P_{t,n,k}^{S,\zeta_s,\max}$, wie obenstehend genannt, durch das jeweilige Energiesystem an die Steuerungsplattform übermittelt und durch diese empfangen wurden. Weiterhin ist bevorzugt $T = \Delta T_t$.

Ein möglicher Energieaustausch *s* kann ebenfalls als Szenario bezeichnet werden, sodass das obenstehende Optimierungsproblem für alle Szenarien gelöst wird. Anschließend wird eine Gesamtlösung aus den berechneten Teillösungen ermittelt. Hierbei ist die Gesamtlösung ein vorteilhafter Kompromiss/Ausgleich zwischen der insgesamt zwischen den Energiesystemen ausgetauschten Energiemenge (Handelsvolumen) und dem Risiko beziehungsweise der Wahrscheinlichkeit des Szenarios (Szenariowahrscheinlichkeit $\zeta_s$). Die Gesamtlösung wird hierbei bevorzugt für jeden Zielfunktionswert beziehungsweise jede Teillösung $Z(\zeta_s)$ eines zugehörigen Szenarios *s* beziehungsweise möglichen Energieaustausches s durch

$$\max_{s} \left[ k \frac{Z(\zeta_{s-1}) - Z(\zeta_s)}{\zeta_{s-1} - \zeta_s} - k \frac{Z(\zeta_s) - Z(\zeta_{s+1})}{\zeta_s - \zeta_{s+1}} \right]$$

bestimmt, wobei ergänzend ein zusätzlicher Gewichtungsfaktor k vorgesehen sein kann. Mit anderen Worten wird ein optimales Szenario s*, das der Gesamtlösung $Z^* = Z(\zeta_{s=s^*})$ entspricht, ermittelt. In der bereits oben genannten Gleichung für die Berechnung der Gesamtlösung ist $k = 1$.

Mittels des Gewichtungsfaktors k kann der Zielfunktionswert oder die Szenariowahrscheinlichkeit, das heißt der Wahrscheinlichkeitswert eines möglichen Energieaustausches, stärker gewichtet werden. Beispielsweise wird dadurch eine möglichst robuste Gesamtlösung mit einem kleineren Zielfunktionswert ermittelbar. Dies ist insbesondere dann vorteilhaft, wenn das Energieaustauschsystem beziehungsweise der lokale Energiemarkt mit einem möglichst geringen Risiko, das heißt mit einer möglichst kleinen Unsicherheit bezüglich der Energieaustausche, betrieben werden soll.

Alternativ oder ergänzend wird die Gesamtlösung dadurch berechnet, dass die betragsmäßige Differenz benachbarter Teillösungen $|Z(\zeta_s) - Z(\zeta_{s-1})/(\zeta_{s-1} - \zeta_s)|$ einen festgelegten Schwellenwert überschreitet.

Ein mögliches Verfahren zur Berechnung der Gesamtlösung, das heißt vorliegend zur Ermittlung eines Wertes $s = s^*$ könnte gemäß der folgenden Schritte durchgeführt werden. In einem ersten Schritt werden die Teillösungen gesampelt, beispielsweise gemäß ihrem Funktionsverlauf $Z(\zeta_s)$. Typischerweise gibt es hierbei einen Übergangsbereich, innerhalb welchem weitere $Z(\zeta_s)$ deutlich schlechter werden als ein vorheriger Wert. In diesem Fall sollte in einem zweiten Schritt der vorherige Wert als $s = s^*$ beziehungsweise $Z(\zeta_{s^*})$ als Gesamtlösung festgelegt werden. Hierbei überschreitet $|Z(\zeta_s) - Z(\zeta_{s-1})/(\zeta_{s-1} - \zeta_s)|$ im Vergleich zu benachbarten Werten den festgelegten Schwellenwert .

Beispielsweise weist der Gradient $|Z(\zeta_s) - Z(\zeta_{s-1})/(\zeta_{s-1} - \zeta_s)|$ die Werte [1,5,1,10,1,1,1]. Wenn der Schwellenwert 4 ist, so würde von niedrigen zu hohen Wahrscheinlichkeitswerte, die zum Wert 5 zugehörige Teillösung als Gesamtlösung bestimmt werden. Das ist beispielsweise deshalb der Fall, da eine möglichst große Menge an ausgetauschter Energie (Handelsvolumen) vorteilhaft ist.

Typischerweise weist der Schwellenwert die Dimension Handelsvolumen pro Wahrscheinlichkeitswert/Szenariowahrscheinlichkeit auf. Das Handelsvolumen kann die Einheit Kilowattstunden oder Euro aufweisen. Die Wahrscheinlichkeitswerte sind dimensionslos und weisen einen Zahlenwert zwischen 0 und 1 beziehungsweise zwischen 0 Prozent und 100 Prozent auf. Dadurch ist der Schwellenwert beziehungsweise der oben genannte Gradient gut interpretierbar. In Abhängigkeit einer vorliegenden Risikoabschätzung, beispielsweise durch spätere Erfahrungswerte, vorliegenden Bedingungen zum übergeordneten Netz usw., und einer Risikobereitschaft kann der Schwellenwert manuell festgelegt werden. Weiterhin kann sich der Schwellenwert in Abhängigkeit der Zeit ändern, das heißt dynamisch ein neuer Schwellenwert festgelegt werden. Insbesondere ist dies abhängig von einer Konsistenz bisheriger vorhergesagter und/oder verwendeter Wahrscheinlichkeitswerte.

Alternativ oder ergänzend könnte das Optimierungsproblem mittels zwei Zielfunktionen ausgebildet werden. Hierbei könnte eine erste Zielfunktion die gesamt ausgetauschte Energiemenge modellieren und die zweite Zielfunktion die Szenariowahrscheinlichkeit, das heißt die jeweiligen Wahrscheinlichkeitswerte. Hierbei ist vorgesehen beide Zielfunktionen zu maximieren.

Zur Lösung des Optimierungsproblems, das heißt zum Berechnen der Teillösungen können bekannte numerische Löser (englisch: Solver), insbesondere Gurobi™, verwendet werden.

Gemäß einer vorteilhaften Ausgestaltung der Erfindung werden durch die Steuerungsplattform für die Energieaustausche erforderliche Reservekapazitäten basierend auf der Gesamtlösung ermittelt.

Mit anderen Worten kann aufgrund der Gesamtlösung, die die Unsicherheiten bezüglich der Energieaustausche gemäß der vorliegenden Erfindung und/oder einer ihrer Ausgestaltungen berücksichtigt, eine verbesserte Abschätzung der erforderlichen Reserveenergie beziehungsweise der erforderlichen Reservekapazitäten erfolgen. Dadurch wird vorteilhafterweise die energetische Effizienz eines lokalen Energiemarktes, der die Steuerungsplattform umfasst, verbessert. Insbesondere werden Differenzen in der Energiebilanz, die zu entsprechenden Reservekapazitäten führen, vorab der tatsächlichen Energieaustausche erkannt und können somit technisch kontrollierbar auf ein möglichst geringes Maß reduziert werden. Mit anderen Worten werden durch die Einbeziehung der Unsicherheiten im Optimierungsmodell, insbesondere in Kombination mit der Netztopologie, Netzengpässe vorrausschauend reduziert.

Weitere Vorteile, Merkmale und Einzelheiten der Erfindung ergeben sich aus den im Folgenden beschriebenen Ausführungsbeispielen sowie anhand der Zeichnungen. Dabei zeigen schematisiert:

Figur 1    eine probabilistische Vorhersage für eine Photovoltaikanlage; und

Figur 2    eine graphische Darstellung einer Berechnung einer Gesamtlösung.

Gleichartige, gleichwertige oder gleichwirkende Elemente können in einer der Figuren oder in den Figuren mit denselben Bezugzeichen versehen sein.

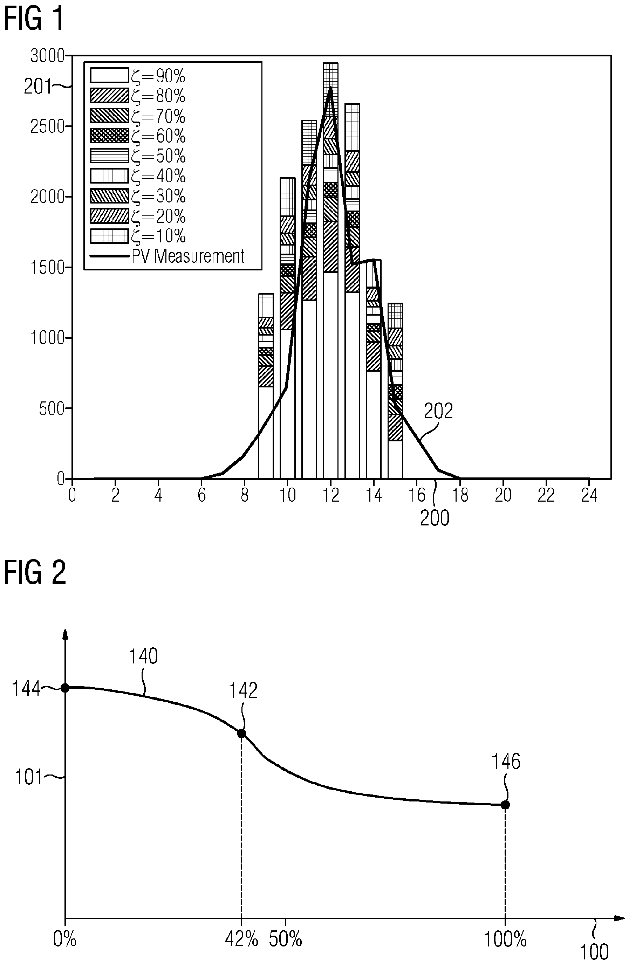

Die Figur 1 zeigt eine exemplarische probabilistische Vorhersage für eine Photovoltaikanlage, gemäß welcher mögliche Energieaustausche und zugehörige Wahrscheinlichkeitswerte ermittelbar und/oder bereitstellbar sind. Nach ihrer Ermittlung und/oder Bereitstellung können diese durch das zugehörige Energiesystem, welches vorliegend die Photovoltaikanlage umfasst, an eine Steuerungsplattform gemäß der vorliegenden und/oder einer ihrer Ausgestaltungen übermittelt werden.

An der Abszisse 200 sind die Stunden eines Tages, beispielsweise des nächsten Tages (Day-Ahead-Handel), aufgetragen. An der Ordinate 201 ist die durch die Photovoltaikanlage bereitgestellte Leistung in Watt aufgetragen.

Für jede Stunde des Tages wird eine probabilistische Vorhersage berechnet. Mit anderen Worten werden für jede Stunde des Tages mehrere Wahrscheinlichkeitswerte und zugehörige mögliche Energieaustausche an die Steuerungsplattform übermittelt und durch diese empfangen. Hierbei können die Wahrscheinlichkeitswerte kontinuierlich sein, sodass für jede Stunde des Tages eine Wahrscheinlichkeitsdichtefunktion der möglichen Energieaustausche an die Steuerungsplattform übermittelt und durch diese empfangen wird. Der Zeitbereich kann, insbesondere für einen Intra-Day-Handel, kleiner als eine Stunde sein, insbesondere 15 Minuten.

In der Figur sind Quantile der Wahrscheinlichkeitsverteilung von 10 Prozent bis 90 Prozent in 10 Prozentschritten durch eine verschiedene Schraffierung zur jeweiligen Stunde dargestellt.

Der tatsächliche Verlauf der durch die Photovoltaikanlage bereitgestellten Leistung über den Tag ist mit dem Bezugszeichen 202 gekennzeichnet. Hierbei ist erkennbar, dass gerade in den Bereichen von Sonnenaufgang und Sonnenuntergang deutliche Abweichungen zum erwartenden Verlauf beziehungsweise bezüglich der Wahrscheinlichkeitsverteilung auftreten.

Gemäß der vorliegenden Erfindung und/oder einer ihrer Ausgestaltungen wird für jeden Wahrscheinlichkeitswert $\zeta_s$, vorliegend für $\zeta_s$ = 10 %, 20 %, ...,90 %, eine Teillösung eines Optimierungsverfahrens ermittelt, welche für den zugehörigen Wahrscheinlichkeitswert eine optimale und möglichst effiziente gesamtheitliche Lösung bezüglich der Energieaustausche zwischen den Energiesystemen darstellt. Dadurch ergibt sich eine Funktion der Teillösungen, die von den Wahrscheinlichkeitswerten abhängig ist. Aus dieser Funktion wird anschließend eine optimale Gesamtlösung berechnet beziehungsweise ermittelt. Dies wird anschaulich durch die Figur 2 dargestellt.

Die Figur 2 zeigt eine graphische Darstellung einer Berechnung beziehungsweise einer Ermittlung einer Gesamtlösung 142 aus den Teillösungen, die in ihrer Gesamtheit eine Funktion 140 in Abhängigkeit der Wahrscheinlichkeit beziehungsweise in Abhängigkeit der Wahrscheinlichkeitswerte ausbilden.

An der Abszisse 100 ist die Wahrscheinlichkeit eines möglichen Energieaustausches, das heißt der jeweilige Wahrscheinlichkeitswert in Prozent aufgetragen.

An der Ordinate 101 ist der Wert der jeweiligen zum Wahrscheinlichkeitswert zugehörigen Teillösung in beliebiger Dimension und Einheit aufgetragen.

Die Gesamtheit der Teillösungen bildet eine Funktion in Abhängigkeit der Wahrscheinlichkeit aus, deren Verlauf mit dem Bezugszeichen 140 gekennzeichnet ist. Die Wahrscheinlichkeit beziehungsweise der Wahrscheinlichkeitswert für einen möglichen Energieaustausch kann ebenfalls als Szenariowahrscheinlichkeit bezeichnet werden, da mögliche Energieaustausche ein jeweiliges Szenario darstellen. Somit ist auf der Abszisse 100 die Szenariowahrscheinlichkeit in Prozent aufgetragen.

Der grundsätzliche Verlauf der Kurve 140 zeigt, dass eine risikoreiche Gesamtlösung 144 ermittelt werden kann, die zwar einen vorteilhaften vergleichbar hohen Zielfunktionswert (Wert der zugehörigen Teillösung) aufweist, aber ein vergleichbar hohes Risiko. Das ist deshalb der Fall, da die Wahrscheinlichkeit für den Eintritt der Energieaustausche im Wesentlichen bei 0 % liegt. Alternativ kann eine robuste beziehungsweise risikoarme Gesamtlösung 146 ermittelt werden, die zwar eine hohe Wahrscheinlichkeit, von vorliegend nahezu 100 % aufweist, jedoch einen nicht vorteilhaften und vergleichbar geringen Zielfunktionswert. Hierbei sei bemerkt, dass im Hinblick auf die Optimierung ein möglichst maximaler Zielfunktionswert vorteilhaft ist, da dieser beispielsweise das ausgetauschte Energievolumen, kennzeichnet. Die Zielfunktion kann ergänzt werden um eine gewichtete Kombination aus Gesamtkohlenstoffdioxidemissionen, Primärenergieeinsatz und/oder die Betriebskosten, die typischerweise minimiert werden sollen. Allerdings kann eine Minimierung durch Änderung des Vorzeichens der Zielfunktion stets in eine Maximierung übergeführt werden. Somit ist grundsätzlich und ohne Beschränkung der Allgemeinheit ein möglichst großer Zielfunktionswert vorteilhaft.

Gemäß der Figur 2 ist es somit vorteilhaft einen Kompromiss zwischen der risikoreichen Lösung 144 und der risikoarmen Lösung 146 zu ermitteln. Dies kann gemäß der vorliegenden Erfindung und/oder einer ihrer Ausgestaltungen beispielsweise mittels einer markanten Änderung des Funktionsverlaufes 140 erfolgen. Vorliegend weist die Kompromisslösung 142, das heißt die optimale Gesamtlösung 142, einen zugehörigen Wahrscheinlichkeitswert von 42 % auf. Ein markanter Anstieg kann durch eine deutliche Änderung benachbarter Gradienten der Funktion 140 gekennzeichnet sein.

Die gemäß der vorliegenden Erfindung ermittelte beziehungsweise berechnete Gesamtlösung 142 ist somit ein bestmöglicher Kompromiss beziehungsweise Ausgleich zwischen der risikoreichen Gesamtlösung 144 und der risikoarmen Gesamtlösung 146. Dadurch kann besonders bevorzugt das erfindungsgemäße lokale Energieaustauschsystem (lokaler Energiemarkt) energetisch effizienter und mit einem geringen Ausfallrisiko beziehungsweise Betriebsrisiko betrieben werden.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

Bezugszeichenliste

| 100 | Abszisse |
|-----|----------|
| 101 | Ordinate |
| 140 | Funktion |
| 142 | Gesamtlösung |
| 144 | Risikoreiche Lösung |
| 146 | Risikoarme Lösung |
| 200 | Abszisse |
| 201 | Ordinate |
| 202 | Messkurve |

**Patentansprüche**

1. Verfahren zum Betrieb einer Steuerungsplattform für Energieaustausche zwischen mehreren Energiesystemen, wobei durch die Steuerungsplattform von den Energiesystemen für wenigstens einen Zeitbereich jeweils wenigstens eine Information über einen vorgesehenen Energieaustausch empfangen wird, und bei dem die Steuerungsplattform bezüglich einer Zielfunktion optimale Energieaustausche zwischen den Energiesystemen als Lösung eines Optimierungsverfahrens berechnet, **gekennzeichnet dadurch, dass**

   - die Steuerungsplattform von wenigstens einem der Energiesysteme eine Information über mehrere mögliche Energieaustausche s empfängt, wobei jedem dieser Energieaustausche $s$ ein Wahrscheinlichkeitswert $\zeta_s$ zugeordnet ist, der ebenfalls durch die Steuerungsplattform empfangen wird;
   - für jeden der empfangenen möglichen Energieaustausche $s$ ein Optimierungsverfahren durchgeführt und somit eine zugehörige Teillösung $Z(\zeta_s)$ berechnet wird;
   - die Gesamtlösung (142) aus den mehreren Teillösungen $Z(\zeta_s)$ in Abhängigkeit ihrer Wahrscheinlichkeitswerte $\zeta_s$ berechnet wird; und
   - die Energieaustausche zwischen den Energiesystemen basierend auf der ermittelten Gesamtlösung (142) durch die Steuerungsplattform gesteuert werden.

2. Verfahren gemäß Anspruch 1, **gekennzeichnet dadurch, dass** die Steuerung der Energieaustausche s mittels der Steuerungsplattform durch ein Übermitteln von jeweiligen Steuerungsdaten an das jeweilige Energiesystem erfolgt.

3. Verfahren gemäß Anspruch 1 oder 2, **gekennzeichnet dadurch, dass** für einen vorgesehenen Energieverbrauch eines der Energiesysteme eine Information über eine maximal zu verbrauchende Energiemenge von dem Energiesystem durch die Steuerungsplattform empfangen wird.

4. Verfahren gemäß einem der vorhergehenden Ansprüche, **gekennzeichnet dadurch, dass** für eine vorgesehene Energiebereitstellung eines der Energiesysteme eine Information über eine maximal bereitzustellende Energiemenge von dem Energiesystem durch die Steuerungsplattform empfangen wird.

5. Verfahren gemäß einem der vorhergehenden Ansprüche, **gekennzeichnet dadurch, dass** die Gesamtlösung (142) aus den mehreren Teillösungen $Z(\zeta_s)$ durch das Maximum bezüglich der Wahrscheinlichkeitswerte $\zeta_s$ benachbarter Gradienten der Teillösungen $Z(\zeta_s)$ der möglichen Energieaustausche s berechnet wird.

6. Verfahren gemäß einem der vorhergehenden Ansprüche, **gekennzeichnet dadurch, dass** die Gesamtlösung (142) durch

$$\max_s \left[ \frac{Z(\zeta_{s-1}) - Z(\zeta_s)}{\zeta_{s-1} - \zeta_s} - \frac{Z(\zeta_s) - Z(\zeta_{s+1})}{\zeta_s - \zeta_{s+1}} \right]$$

berechnet wird.

7. Verfahren gemäß einem der vorhergehenden Ansprüche, **gekennzeichnet dadurch, dass** die Gesamtlösung (142) dadurch berechnet wird, dass die betragsmäßige Differenz benachbarter Teillösungen $|Z(\zeta_s) - Z(\zeta_{s-1})/(\zeta_{s-1} - \zeta_s)|$ einen festgelegten Schwellenwert überschreitet.

8. Verfahren gemäß einem der vorhergehenden Ansprüche, **gekennzeichnet dadurch, dass** das die Steuerungsplattform basierend auf der Gesamtlösung (142) für die Energieaustausche erforderliche Reservekapazitäten ermittelt.

9. Steuerungsplattform zum Steuern von Energieaustauschen zwischen mehreren Energiesystemen, wobei durch die Steuerungsplattform von den Energiesystemen für wenigstens einen Zeitbereich jeweils wenigstens eine Information über einen vorgesehenen Energieaustausch empfangbar ist, und durch die Steuerungsplattform bezüglich einer Zielfunktion optimale Energieaustausche zwischen den Energiesystemen als Lösung eines Optimierungsverfahren berechenbar sind, **dadurch gekennzeichnet, dass**

   - durch die Steuerungsplattform von wenigstens einem der Energiesysteme eine Information über mehrere mögliche Energieaustausche s empfangbar ist, wobei jedem dieser Energieaustausche s ein Wahrscheinlichkeitswert $\zeta_s$ zugeordnet ist, der ebenfalls durch die Steuerungsplattform empfangbar ist;
   - für jeden der empfangenen möglichen Energieaustausche s ein Optimierungsverfahren durch die Steuerungsplattform durchführbar und somit eine zugehörige Teillösung $Z(\zeta_s)$ berechenbar ist;
   - die Gesamtlösung (142) aus den mehreren Teillösungen $Z(\zeta_s)$ in Abhängigkeit ihrer Wahrscheinlichkeitswerte $\zeta_s$ durch die Steuerungsplattform berechenbar sind; und
   - die Energieaustausche zwischen den Energiesystemen basierend auf der ermittelten Gesamtlösung (142) durch die Steuerungsplattform steuerbar sind.

10. Verfahren zum Betrieb eines Energieaustauschsystems, das mehrere Energiesysteme und eine Steuerungsplattform umfasst, wobei die Energiesysteme für wenigstens einen Zeitbereich jeweils eine Information über wenigstens einen vorgesehenen Energieaustausch an die Steuerungsplattform übermitteln, und bei dem die Steuerungsplattform bezüglich einer Zielfunktion optimale Energieaustausche zwischen den Energiesystemen als Lösung eines Optimierungsverfahrens berechnet, **gekennzeichnet dadurch, dass**

   - wenigstens eines der Energiesysteme eine Information über mehrere mögliche Energieaustausche s an die Steuerungsplattform übermittelt, wobei jedem dieser Energieaustausche s ein Wahrscheinlichkeitswert $\zeta_s$ zugeordnet ist, der ebenfalls an die Steuerungsplattform übermittelt wird;
   - für jeden der übermittelten möglichen Energieaustausche s eine Optimierungsverfahren durchgeführt und somit eine zugehörige Teillösung $Z(\zeta_s)$ ermittelt wird;
   - die Gesamtlösung (142) aus den mehreren Teillösungen $Z(\zeta_s)$ in Abhängigkeit ihrer Wahrscheinlichkeitswerte $\zeta_s$ berechnet wird; und
   - die Energieaustausche zwischen den Energiesystemen basierend auf der ermittelten Gesamtlösung (142) durch die Steuerungsplattform gesteuert werden.

11. Energieaustauschsystem, umfassend mehrere Energiesysteme und eine Steuerungsplattform, wobei die Energiesysteme und die Steuerungsplattform derart ausgebildet sind, dass durch die Energiesysteme für wenigstens einen Zeitbereich jeweils eine Information über wenigstens einen vorgesehenen Energieaustausch an die Steuerungsplattform übermittelbar ist, und mittels der Steuerungsplattform bezüglich einer Zielfunktion optimale Energieaustausche zwischen den Energiesystemen als Lösung eines Optimierungsverfahrens berechenbar ist, **dadurch gekennzeichnet, dass**

   - wenigstens durch eines der Energiesysteme eine Information über mehrere mögliche Energieaustausche s an die Steuerungsplattform übermittelbar sind, wobei jedem dieser Energieaustausche s ein Wahrscheinlichkeitswert $\zeta_s$ zugeordnet ist, der ebenfalls an die Steuerungsplattform übermittelbar ist;
   - für jeden der übermittelten möglichen Energieaustausche s eine Optimierungsverfahren durch die Steuerungsplattform durchführbar und somit eine zugehörige Teillösung $Z(\zeta_s)$ berechenbar ist;
- die Gesamtlösung (142) aus den mehreren Teillösungen $Z(\zeta_s)$ in Abhängigkeit ihrer Wahrscheinlichkeitswerte $\zeta_s$ durch die Steuerungsplattform berechenbar ist; und
- die Energieaustausche zwischen den Energiesystemen basierend auf der ermittelten Gesamtlösung (142) durch die Steuerungsplattform steuerbar sind.

## FIG 1

## FIG 2

Europäisches Patentamt
European Patent Office
Office européen des brevets

# EUROPÄISCHER RECHERCHENBERICHT

**Nummer der Anmeldung**

EP 20 16 1156

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2012/143385 A1 (GOLDSMITH STEVEN Y [US]) 7. Juni 2012 (2012-06-07) * Absätze [0006] - [0013], [0030], [0031], [0044] * * Absätze [0056], [0070]; Abbildungen 1-12 * | 1-11 | INV. H02J3/00 |
| X | WO 2015/048737 A1 (DO ROSARIO JACKSEARIO ANTONIO DIONISIO [AO]; KELLEY BRIAN [US]) 2. April 2015 (2015-04-02) * Absätze [0013] - [0044], [0048]; Abbildungen 1-7 * | 1-11 | |
| A | WO 2007/065135 A2 (ALTERNATIVE ENERGY SYSTEMS CON [US]; GIBSON GERALD L [US] ET AL.) 7. Juni 2007 (2007-06-07) * Absätze [0014] - [0021]; Abbildungen 1-10 * | 1-11 | |
| A | EP 1 263 108 A1 (ROKE MANOR RESEARCH [GB]) 4. Dezember 2002 (2002-12-04) * Absätze [0018] - [0075]; Abbildungen 1-4 * | 1-11 | RECHERCHIERTE SACHGEBIETE (IPC) H02J G06Q |

Der vorliegende Recherchenbericht wurde für alle Patentansprüche erstellt

| Recherchenort | Abschlußdatum der Recherche | Prüfer |
|---|---|---|
| München | 4. September 2020 | Krasser, Bernhard |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 16 1156

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-09-2020

| Im Recherchenbericht angeführtes Patentdokument | Datum der Veröffentlichung | Mitglied(er) der Patentfamilie | Datum der Veröffentlichung |
|---|---|---|---|
| US 2012143385 A1 | 07-06-2012 | US 2012143385 A1<br>WO 2012078433 A2 | 07-06-2012<br>14-06-2012 |
| WO 2015048737 A1 | 02-04-2015 | US 2016233682 A1<br>WO 2015048737 A1 | 11-08-2016<br>02-04-2015 |
| WO 2007065135 A2 | 07-06-2007 | US 2007124026 A1<br>WO 2007065135 A2 | 31-05-2007<br>07-06-2007 |
| EP 1263108 A1 | 04-12-2002 | CA 2388571 A1<br>EP 1263108 A1<br>US 2003009265 A1 | 01-12-2002<br>04-12-2002<br>09-01-2003 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3518369 A1